# EUROPEAN PATENT SPECIFICATION

(11) **EP 4 269 195 B1**
(45) Date of publication and mention of the grant of the patent: **24.09.2025**
(21) Application number: 21835836.4
(22) Date of filing: 07.12.2021
(51) Int. Cl.: B60T 8/88, B60T 8/17, B60T 8/92, B62J 99/00, B62L 3/02

(54) **BRAKE SYSTEM FOR STRADDLE-TYPE VEHICLE AND STRADDLE-TYPE VEHICLE**
BREMSSYSTEM FÜR EIN ZWEIRAD-FAHRZEUG UND DESSEN ZWEIRAD-FAHRZEUG
SYSTEME DE FREINAGE POUR VEHICULE DE TYPE DEUX-ROUES ET VEHICULE DEUX-ROUES ASSOCIÉ

(30) Priority: 25.12.2020 JP 2020216492
(43) Date of publication of application: 01.11.2023
(73) Proprietor: Robert Bosch GmbH, 70442 Stuttgart (DE)
(72) Inventor: OHTAKA, Jun, Yokohama-shi, Kanagawa 224-8501 (JP)
(86) International application number: PCT/IB2021/061391
(87) International publication number: WO 2022/136989

(56) References cited:
- WO-A1-2021/198859
- DE-A1- 10 307 339
- JP-A- 2020 100 229
- US-A1- 2019 375 388

## Description

### Technical Field

The present invention relates to a brake system for a straddle-type vehicle having at least one operator operated by a rider and a straddle-type vehicle having such a brake system.

### Background Art

A brake system for a straddle-type vehicle is known from JP-A-2014-15077 which includes at least one operator (for example, brake pedal, brake lever, and the like) operated by a rider. The brake system includes a mechanism portion including a friction applying device which brakes a wheel with a frictional force corresponding to at least a movement of the operator. The mechanism portion includes a master cylinder which transmits the movement of the operator and a wheel cylinder which communicates with the master cylinder via a fluid passage filled with brake fluid. At least part of the fluid passage is made up of a brake fluid pipe.

JP 2020 100229 A describes a brake system for a straddle-type vehicle which includes at least one operator operated by a rider, wherein a mechanism portion including a friction applying device which brakes a wheel of the straddle-type vehicle with a frictional force corresponding to at least a movement of the operator is provided. A further example of a brake system for a straddle-type vehicle is described in US 2019/375388 A1.

### Summary of Invention

### Technical Problem

The straddle-type vehicle has an extremely small body compared to other vehicles (for example, automobiles, trucks, and the likes). Therefore, in the brake system for a straddle-type vehicle of the related art, it may be difficult to secure a space for arranging the brake fluid pipe and a space for the work. Therefore, in addition to the friction applying device, it may be considered to adopt a mechanism portion including an operator movement sensor for detecting the movement of the operator and an actuator unitized with the friction applying device. In other words, during normal braking (so-called service braking), a control unit increases an output of the actuator as an input of the operator by the rider increases, so that a frictional force applied to the wheel increases. However, in such a configuration, it may be difficult to apply a frictional force to the wheel when energization of the actuator is stopped for some reason. In particular, the straddle-type vehicle has a high need to simplify protection of the friction applying device compared to other vehicles (for example, automobiles, trucks, and the likes). Therefore, when an actuator unitized with the friction applying device is adopted, possibilities of stopping the energization of the actuator can be increased.

The invention is made in context of the problem described above and an object of the invention is to improve mountability of a brake system to a straddle-type vehicle while considering safety.

### Solution to Problem

A brake system according to the invention is a brake system for a straddle-type vehicle which includes at least one operator operated by a rider, where a mechanism portion including a friction applying device which brakes a wheel of the straddle-type vehicle with a frictional force corresponding to at least a movement of the operator is provided, the mechanism portion further includes an operator movement sensor for detecting the movement of the operator and an actuator unitized with the friction applying device, further, a control unit which controls an output of the actuator based on a detection result of the operator movement sensor to change the frictional force applied to the wheel by the friction applying device during normal braking is provided, and when the actuator is in a non-energized state, the frictional force is applied to the wheel by the friction applying device.

A straddle-type vehicle according to the invention is provided with the brake system described above. Advantageous Effects of Invention

In the brake system according to the invention, the mechanism portion includes the friction applying device which brakes the wheel of the straddle-type vehicle with the frictional force corresponding to the movement of the operator, the operator movement sensor which detects the movement of the operator, and the actuator which is unitized with the friction applying device. During normal braking, the control unit controls an output of the actuator based on a detection result of the operator movement sensor to change the frictional force applied to the wheel by the friction applying device. Further, when the actuator is in a non-energized state, the friction applying device applies a frictional force to the wheel. Therefore, when energization of the actuator is stopped for some reason, it is possible to apply a frictional force to the wheel, and thus it is possible to improve mountability of the brake system to the straddle-type vehicle while considering safety.

### Brief Description of Drawings

Fig. 1 is a view illustrating a configuration of a straddle-type vehicle equipped with a brake system according to an embodiment of the invention.
Fig. 2 is a diagram illustrating a configuration of the brake system according to the embodiment of the invention.
Fig. 3 is a diagram illustrating a configuration of a hydraulic pressure adjusting unit of the brake system according to the embodiment of the invention.
Fig. 4 is a diagram illustrating a main configuration of a second mechanism portion of the brake system according to the embodiment of the invention.
Fig. 5 is a diagram illustrating a system configuration of the brake system according to the embodiment of the invention.
Fig. 6 is a diagram illustrating a modification example of the configuration of the brake system according to the embodiment of the invention.

### Description of Embodiments

Hereinafter, the invention will be described with reference to the drawings.

In the following, a case where a brake system according to the invention is applied to a motorcycle having 2 wheels will be described, but the brake system according to the invention may be applied to a straddle-type vehicle other than the motorcycle having 2 wheels. A straddle-type vehicle means all vehicles that a rider straddles. Straddle-type vehicles include motorcycles (motorcycles having 2 wheels, motorcycles having 3 wheels), buggies, bicycles, and the likes. Motorcycles include motorcycles having 2 wheels or motorcycles having 3 wheels whose propulsion source is an engine, motorcycles having 2 wheels or motorcycles having 3 wheels whose propulsion source is an electric motor, and the likes, and include, for example, motorbikes, scooters, electric scooters, and the likes. Bicycles also mean all vehicles that can be propelled on the road by a pedaling force of a rider applied to a pedal. Bicycles include ordinary bicycles, electrically power assisted bicycles, electric bicycles, and the likes.

Further, in the following, a case where a first mechanism portion, which is a mechanism portion for braking a front wheel, is hydraulically connected to a first operator, which is an operator for braking the front wheel, and a second mechanism portion, which is a mechanism portion for braking a rear wheel, is communicatively connected to a second operator, which is an operator for braking the rear wheel, (that is, including an actuator unitized with a friction applying device) will be described. However, the first mechanism portion may be connected to the first operator in a communicative manner and the second mechanism portion may be connected to the second operator in a hydraulic manner. Further, the first mechanism portion may be connected to the first operator in a communicative manner and the second mechanism portion may be connected to the second operator in a communicative manner.

Further, in the following, a case where, when the mechanism portion is hydraulically connected to the operator, the mechanism portion includes a hydraulic pressure adjusting unit and a hydraulic pressure of a brake fluid of a wheel cylinder is reduced by using a pump of the hydraulic pressure adjusting unit will be described. However, the hydraulic pressure of the brake fluid of the wheel cylinder may be reduced by using a pumpless-type hydraulic pressure adjusting unit.

Further, in the following, a case where both the first mechanism portion and the second mechanism portion include only one friction applying device will be described. However, at least one of the first mechanism portion and the second mechanism portion may include a plurality of friction applying devices. Further, the plurality of friction applying devices provided to each mechanism portion may apply a frictional force in response to an input to the same operator, or may apply a frictional force in response to inputs to different operators.

Further, the configuration, operation, and the like described below are examples and the brake system according to the invention is not limited to such configurations, operations, and the like. Further, for the detailed structure, the illustration is simplified or omitted as appropriate. In addition, duplicate or similar explanations may be simplified or omitted as appropriate.

### Embodiment.

A brake system according to an embodiment will be described below.

### <Configuration and Operation of Brake System>

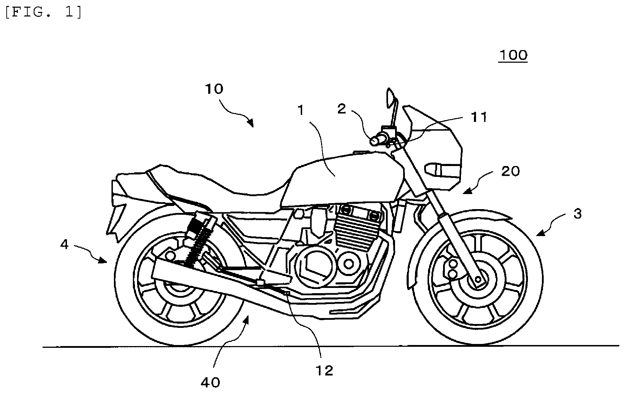

The configuration and operation of the brake system according to the embodiment will be described with reference to Figs. 1 to 6.

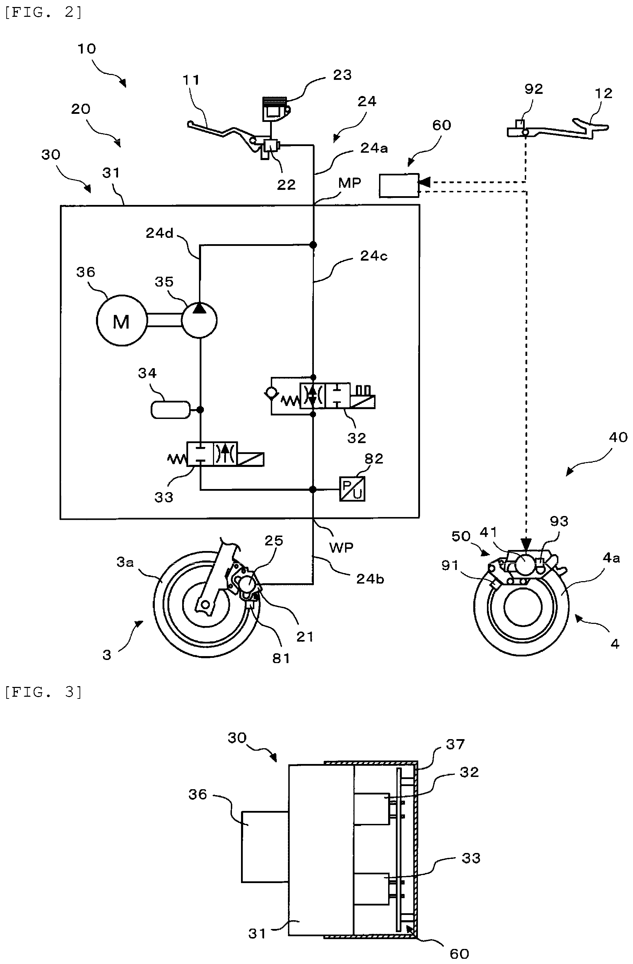

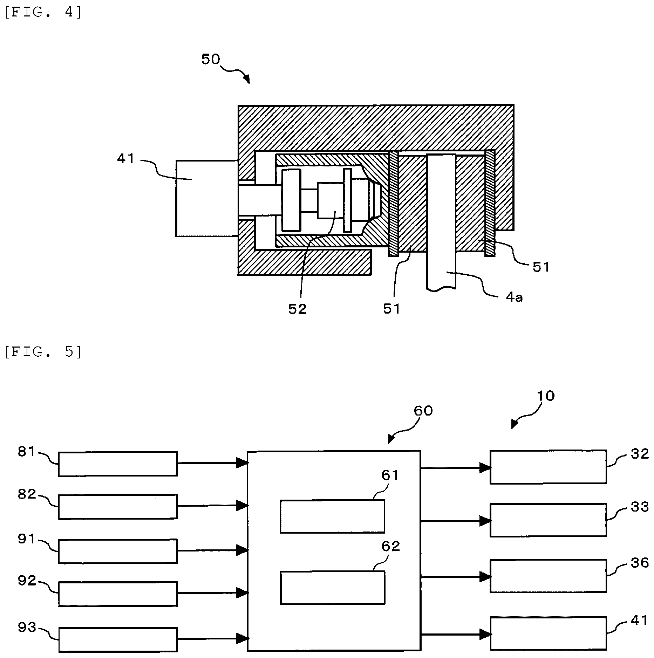

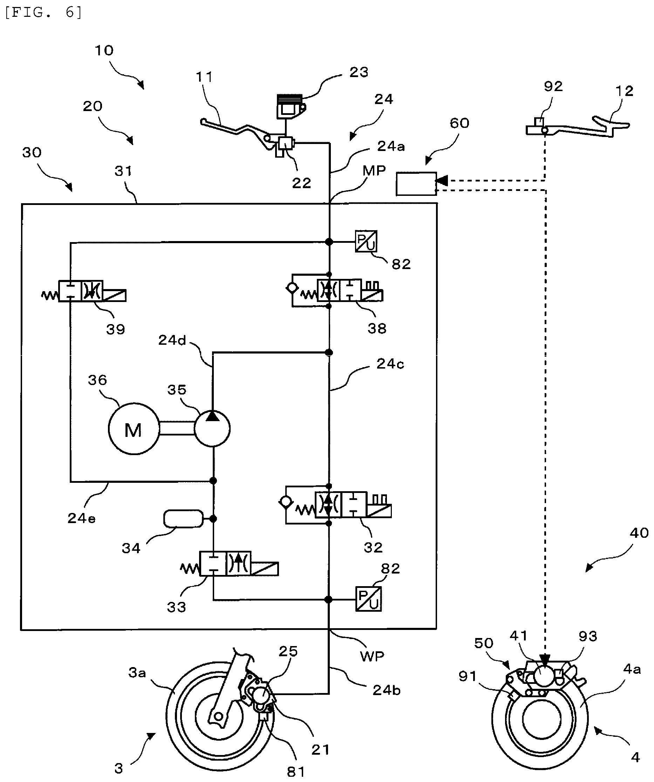

Fig. 1 is a view illustrating a configuration of a straddle-type vehicle equipped with a brake system according to the embodiment of the invention. Fig. 2 is a diagram illustrating a configuration of the brake system according to the embodiment of the invention. Fig. 3 is a diagram illustrating a configuration of a hydraulic pressure adjusting unit of the brake system according to the embodiment of the invention. Fig. 4 is a diagram illustrating a main configuration of a second mechanism portion of the brake system according to the embodiment of the invention. Fig. 5 is a diagram illustrating a system configuration of the brake system according to the embodiment of the invention. Fig. 6 is a diagram illustrating a modification example of the configuration of the brake system according to the embodiment of the invention.

In particular, as illustrated in Figs. 1 and 2, a brake system 10 is mounted to a straddle-type vehicle 100. The straddle-type vehicle 100 includes a main body 1, a handle bar 2 which is rotatably held by the main body 1, a front wheel 3 which is rotatably held by the main body 1 together with the handle bar 2, and a rear wheel 4 which is pivotably held by the main body 1. The rear wheel 4 corresponds to a "wheel" in the invention. The front wheel 3 corresponds to "another wheel" in the invention.

The brake system 10 includes a first operator 11 and a second operator 12 operated by a rider. The first operator 11 is configured as, for example, a brake lever provided to the handle bar 2 and is operated by the user's hand. The second operator 12 is configured as, for example, a brake pedal provided to a lower part of the main body 1 and is operated by the user's foot. The second operator 12 corresponds to the "operator" in the invention.

The brake system 10 includes a first mechanism portion 20 connected to the first operator 11 in a hydraulic manner and a second mechanism portion 40 connected to the second operator 12 in a communicative manner. The first mechanism portion 20 brakes the front wheel 3 with a frictional force corresponding to an amount of operation of the first operator 11 by pressing a friction material (not illustrated) of a first friction applying device 21 held by the main body 1 against a disc rotor 3a which pivots together with the front wheel 3. The second mechanism portion 40 brakes the rear wheel 4 with a frictional force corresponding to an amount of operation of the second operator 12 by pressing a friction material 51, which will be described below, of a second friction applying device 50 held by the main body 1 against a disc rotor 4a which pivots together with the rear wheel 4. The first friction applying device 21 and the second friction applying device 50 may have other structures. For example, the first friction applying device 21 may be a device in which a friction material of a brake shoe held in the main body 1 is pressed against a brake drum which pivots together with the front wheel 3 to generate a frictional force corresponding to an amount of operation of the first operator 11. Further, the second friction applying device 50 may be a device in which a friction material of a brake shoe held in the main body 1 is pressed against a brake drum which pivots together with the rear wheel 4 to generate a frictional force corresponding to an amount of operation of the second operator 12. The second mechanism portion 40 corresponds to the "mechanism portion" in the invention. The second friction applying device 50 corresponds to the "friction applying device" in the invention.

The first mechanism portion 20 includes a master cylinder 22 to which the movement of the first operator 11 is transmitted, a reservoir 23 attached to the master cylinder 22, a wheel cylinder 25 which communicates with the master cylinder 22 via a fluid passage 24 filled with the brake fluid and is built in the first friction applying device 21, a brake fluid pipe 24a which forms a part of the fluid passage 24 and has one end connected to the master cylinder 22, a brake fluid pipe 24b which forms a part of the fluid passage 24 and has one end connected to the wheel cylinder 25, and a hydraulic pressure adjusting unit 30 connected to the other end of the brake fluid pipe 24a and the other end of the brake fluid pipe 24b. The hydraulic pressure adjusting unit 30 may be directly connected to the master cylinder 22 without using the brake fluid pipe 24a. Further, the hydraulic pressure adjusting unit 30 may be directly connected to the wheel cylinder 25 without using the brake fluid pipe 24b. Further, the hydraulic pressure adjusting unit 30 may be unitized with the master cylinder 22 or the wheel cylinder 25.

In particular, as illustrated in Figs. 2 and 3, the hydraulic pressure adjusting unit 30 includes a substrate 31. A master cylinder port MP to which the brake fluid pipe 24a is connected, a wheel cylinder port WP to which the brake fluid pipe 24b is connected, a main fluid passage 24c, which is an internal fluid passage which forms a part of the fluid passage 24 and connects the master cylinder port MP and the wheel cylinder port WP, and an auxiliary fluid passage 24d, which is an internal fluid passage which forms a part of the fluid passage 24 and bypasses the main fluid passage 24c are formed on the substrate 31. The brake fluid of the wheel cylinder 25 is released to an intermediate portion of the main fluid passage 24c via the auxiliary fluid passage 24d.

An inlet valve 32 is provided to the main fluid passage 24c. The auxiliary fluid passage 24d is provided with an outlet valve 33, an accumulator 34 for storing the brake fluid, and a pump 35 in this order from an upstream side. The pump 35 is driven by a motor 36. The inlet valve 32, the outlet valve 33, the accumulator 34, the pump 35, and the motor 36 are assembled to the substrate 31. A housing 37 for accommodating at least a part of a control device (ECU) 60 is attached to the substrate 31. The inlet valve 32 is, for example, an electromagnetic valve which switches the flow of brake fluid from open to closed at an installation location when a non-energized state is changed to an energized state. The outlet valve 32 is, for example, an electromagnetic valve which switches the flow of brake fluid toward the pump 35 through an installation location from closed to open when the non-energized state is changed to the energized state.

In particular, as illustrated in Figs. 2 and 4, the second mechanism portion 40 includes an actuator 41 unitized with the second friction applying device 50. The actuator 41 may be attached to the outside of the second friction applying device 50, or may be built in the second friction applying device 50. The second friction applying device 50 is configured as a floating caliper. The second friction applying device 50 may have another structure. For example, the second friction applying device 50 may be configured as an opposed type caliper. The second friction applying device 50 includes a pair of friction materials 51 pinching the disc rotor 4a and a spindle 52 for adjusting the distance of the friction material 51 with respect to the disc rotor 4a. The actuator 41 is connected to the spindle 52 and causes the spindle 52 to make a linear movement for adjusting its distance. The actuator 41 is, for example, a motor. The linear movement of the spindle 52 may be transmitted to the friction material 51 via an elastic member, or may be transmitted to the friction material 51 via a fluid such as a hydraulic fluid.

Here, the spindle 52 is urged in a direction in which the distance to the disc rotor 4a is reduced by an urging member (not illustrated) such as a spring built in the second friction applying device 50 or the actuator 41. Therefore, when the actuator 41 is in a non-energized state, that is, when there is no output of the actuator 41, the spindle 52 is pushed out by the urging force and the friction material 51 of the second friction applying device 50 is pressed against the disc rotor 4a, in such a manner that the rear wheel 4 is braked. The urging force may be sufficient to stop the straddle-type vehicle 100. Also, when the actuator 41 is in an energized state, as the output of the actuator 41 increases, the spindle 52 is returned against the urging force and the friction material 51 of the second friction applying device 50 is separated from the disc rotor 4a. That is, when the actuator 41 is in the non-energized state, a frictional force is applied to the rear wheel 4 by the second friction applying device 50, and when the actuator 41 is in the energized state, the frictional force applied to the rear wheel 4 by the second friction applying device 50 decreases as the output of the actuator 41 increases. The output of the actuator 41 means a force applied by the actuator 41 to a mechanical element (spindle 52 in this case) which performs physical movement.

In particular, as illustrated in Figs. 2 and 5, the control device 60 includes the inlet valve 32, the outlet valve 33, a first control unit 61 which controls an operation of the motor 36, and a second control unit 62 which controls an operation of the actuator 41. Each of the first control unit 61 and the second control unit 62 may be integrated into one, or may be divided into a plurality of units. A part or all of each of the first control unit 61 and the second control unit 62 may be composed of, for example, a microcomputer, a microprocessor unit, or the like, may be composed of an updatable unit such as firmware, or may be a program module or the like executed by a command from a CPU or the like. The second control unit 62 corresponds to the "control unit" of the invention. The first control unit 61 corresponds to "another control unit" in the invention.

Output signals of, for example, a front wheel rotation speed sensor 81, a brake hydraulic pressure sensor 82, a rear wheel rotation speed sensor 91, a second operator movement sensor 92, a friction material movement sensor 93, and the like are transmitted to the control device 60 wiredly or wirelessly. The output signals of other sensors may be transmitted to the control device 60. The control device 60 derives a target braking force to be generated in the front wheel 3 and the rear wheel 4 based on the output signals. The first control unit 61 transmits a command signal corresponding to the target braking force to be generated in the front wheel 3 to drivers of the inlet valve 32, the outlet valve 33, and the motor 36 wiredly or wirelessly. Further, the second control unit 62 transmits a command signal corresponding to the target braking force to be generated in the rear wheel 4 to a driver of the actuator 41 wiredly or wirelessly. The second operator movement sensor 92 corresponds to the "operator movement sensor" in the invention.

The front wheel rotation speed sensor 81 detects a rotation speed of the front wheel 3. The front wheel rotation speed sensor 81 is held by, for example, the main body 1. The front wheel rotation speed sensor 81 may detect other physical quantities which are substantially convertible to the rotation speed of the front wheel 3.

The brake hydraulic pressure sensor 82 detects, for example, a hydraulic pressure of the brake fluid of the wheel cylinder 25. The brake hydraulic pressure sensor 82 is provided, for example, further on the wheel cylinder 25 side than the inlet valve 32 in a region of the main fluid passage 24c. The brake hydraulic pressure sensor 82 may detect other physical quantities which are substantially convertible to the hydraulic pressure of the brake fluid of the wheel cylinder 25.

The rear wheel rotation speed sensor 91 detects the rotation speed of the rear wheel 4. The rear wheel rotation speed sensor 91 is held by, for example, the main body 1. The rear wheel rotation speed sensor 91 may detect other physical quantities which are substantially convertible to the rotation speed of the rear wheel 4.

The second operator movement sensor 92 detects the movement of the second operator 12. The second operator movement sensor 92 may be anything that detects a physical quantity which reflects the braking force desired by the rider. For example, the second operator movement sensor 92 may detect an amount of operation of the second operator 12 by the rider, or may detect a force applied to the second operator 12 by the rider. The second operator movement sensor 92 is held by, for example, the main body 1. The second operator movement sensor 92 may detect other physical quantities which are substantially convertible to the amount of operation of the second operator 12 or the force applied to the second operator 12.

The friction material movement sensor 93 detects the movement of the friction material 51 of the second friction applying device 50. The friction material movement sensor 93 may be anything that detects a physical quantity which reflects the braking force generated in the rear wheel 4 by the second friction applying device 50. For example, the friction material movement sensor 93 may detect a driving amount of the actuator 41, or may detect a reaction force acting on the spindle 52. The friction material movement sensor 93 is held by, for example, the second friction applying device 50. The friction material movement sensor 93 may detect other physical quantities which are substantially convertible to the driving amount of the actuator 41 or the reaction force acting on the spindle 52.

The first control unit 61 and the second control unit 62 are accommodated in the housing 37 of the hydraulic pressure adjusting unit 30. That is, the first control unit 61 and the second control unit 62 are unitized with the inlet valve 32, the outlet valve 33, and the motor 36. The second control unit 62 may be unitized with the second friction applying device 50 and the actuator 41, or may be unitized with the second operator movement sensor 92.

When the rider operates the first operator 11 while the straddle-type vehicle 100 is stopped or the straddle-type vehicle 100 is traveling without slipping on the front wheel 3 and the rear wheel 4 exceeding a reference value, that is, at the time of normal braking (so-called service braking) of the first mechanism portion 20, the first control unit 61 controls the inlet valve 32 and the outlet valve 33 in the non-energized state and controls the motor 36 in the non-driving state. When the rider operates the first operator 11, a piston (not illustrated) of the master cylinder 22 is pushed in and the hydraulic pressure of the brake fluid of the wheel cylinder 25 increases, and thus the friction material of the first friction applying device 21 is pressed against the disc rotor 3a. As a result, the front wheel 3 is braked. Also, when the rider releases the first operator 11, the piston of the master cylinder 22 is returned and the hydraulic pressure of the brake fluid of the wheel cylinder 25 decreases, and thus the friction material of the first friction applying device 21 is separated from the disc rotor 3a. That is, in the first mechanism portion 20, the frictional force applied to the front wheel 3 by the first friction applying device 21 changes according to the hydraulic pressure of the brake fluid of the master cylinder 22 during normal braking. Further, when the rider operates the first operator 11, an interlocking brake control operation in which, in addition to applying the frictional force to the front wheel 3 by the first friction applying device 21, the frictional force is applied to the rear wheel 4 by the second friction applying device 50 may be executed.

When the rider is not operating the second operator 12, that is, when the second friction applying device 50 does not need to brake the rear wheel 4, the second control unit 62 increases the output of the actuator 41 to an upper limit. Then, when the rider operates the second operator 12 while the straddle-type vehicle 100 is stopped or the straddle-type vehicle 100 is traveling without slipping on the front wheel 3 and the rear wheel 4 exceeding the reference value, that is, at the time of normal braking of the second mechanism portion 40, the second control unit 62 drives the actuator 41 with a driving amount corresponding to the output signal of the second operator movement sensor 92. When the rider operates the second operator 12, the second control unit 62 reduces the output of the actuator 41 and the spindle 52 is pushed out, and thus the friction material 51 of the second friction applying device 50 is pressed against the disc rotor 4a. As a result, the rear wheel 4 is braked. Also, when the rider releases the second operator 12, the second control unit 62 increases the output of the actuator 41 and the spindle 52 is returned, and thus the friction material 51 of the second friction applying device 50 is separated from the disc rotor 4a. That is, in the second mechanism portion 40, at the time of normal braking, the frictional force applied to the rear wheel 4 by the second friction applying device 50 is changed by the second control unit 62 controlling the output of the actuator 41 based on a detection result of the second operator movement sensor 92. When the rider operates the second operator 12, an interlocking brake control operation in which, in addition to applying the frictional force to the rear wheel 4 by the second friction applying device 50, the frictional force is applied to the front wheel 3 by the first friction applying device 21 may be executed.

The stop of the straddle-type vehicle 100 and the slip occurring on the front wheel 3 and the rear wheel 4 can be determined by a well-known method using the output signals of the front wheel rotation speed sensor 81 and the rear wheel rotation speed sensor 91.

When the straddle-type vehicle 100 is traveling in a state where the front wheel 3 or the rear wheel 4 has a slip exceeding the reference value, the control device 60 executes a slip control operation for suppressing the slip. The slip control operation includes, for example, an operation in which anti-lock braking control of each wheel is executed, an operation in which spin suppression control of each wheel is executed, an operation in which side-slip suppression control of each wheel is executed, and the like. The control device 60 may control other systems mounted to the straddle-type vehicle 100 in addition to the brake system 10 when executing the slip control operation.

In a state where it is necessary to reduce the frictional force applied to the front wheel 3 when the slip control operation is executed, the first control unit 61 controls the inlet valve 32 and the outlet valve 33 in the energized state and drives the motor 36 with a driving amount corresponding to the output signal of the brake hydraulic pressure sensor 82. Such control reduces the hydraulic pressure of the brake fluid in the wheel cylinder 25 and separates the friction material of the first friction applying device 21 from the disc rotor 3a. That is, in the first mechanism portion 20, when the slip control operation is executed, the frictional force applied to the front wheel 3 by the first friction applying device 21 is changed by the first control unit 61 controlling the inlet valve 32, the outlet valve 33, and the motor 36.

In a state where it is necessary to reduce the frictional force applied to the rear wheel 4 when the slip control operation is executed, the second control unit 62 drives the actuator 41 with a driving amount corresponding to the output signal of the friction material movement sensor 93. The spindle 52 is returned by the second control unit 62 increasing the output of the actuator 41 and the friction material 51 of the second friction applying device 50 is separated from the disc rotor 4a. That is, in the second mechanism portion 40, when the slip control operation is executed, the frictional force applied to the rear wheel 4 by the second friction applying device 50 is changed by the second control unit 62 controlling the output of the actuator 41.

The brake system 10 may have a configuration capable of reducing and increasing the frictional force applied to the front wheel 3 when the slip control operation is executed. That is, as illustrated in Fig. 6, a pressure amplifying fluid passage 24e, which is an internal flow path, of which one end is connected to the master cylinder 22 side of a confluence with a downstream end of the auxiliary fluid passage 24d in the main fluid passage 24c and the other end is connected between the accumulator 34 and the pump 35 of the auxiliary fluid passage 24d may be formed on the substrate 31 of the hydraulic pressure adjusting unit 30. A switching valve 38 is provided between a confluence with the pressure amplifying fluid passage 24e in the main fluid passage 24c and the confluence with the downstream end of the auxiliary fluid passage 24d and a pressure amplifying valve 39 is provided to the pressure amplifying fluid passage 24e. The switching valve 38 is, for example, an electromagnetic valve which switches the flow of brake fluid from open to closed at an installation location when the non-energized state is changed to the energized state. The pressure amplifying valve 39 is, for example, an electromagnetic valve which switches the flow of brake fluid toward the pump 35 through an installation location from closed to open when the non-energized state is changed to the energized state.

In a state where it is necessary to apply a frictional force to the front wheel 3 or increase the applied frictional force when executing the slip control operation, the first control unit 61 controls the inlet valve 32 and the outlet valve 33 in the non-energized state, controls the switching valve 38 and the pressure amplifying valve 39 in the energized state, and drives the motor 36 with a driving amount corresponding to the output signal of the brake hydraulic pressure sensor 82. By such control, the hydraulic pressure of the brake fluid of the wheel cylinder 25 is increased and the friction material of the first friction applying device 21 is pressed against the disc rotor 3a. That is, in the first mechanism portion 20, when the slip control operation is executed, the frictional force applied to the front wheel 3 by the first friction applying device 21 is changed by the first control unit 61 controlling the inlet valve 32, the outlet valve 33, the switching valve 38, the pressure amplifying valve 39, and the motor 36.

The brake system 10 may have a configuration capable of reducing and increasing the frictional force applied to the rear wheel 4 when the slip control operation is executed. In a state where it is necessary to apply a frictional force to the rear wheel 4 or increase the applied frictional force when executing the slip control operation, the second control unit 62 drives the actuator 41 with a driving amount corresponding to the output signal of the friction material movement sensor 93. The spindle 52 is pushed out by the second control unit 62 reducing the output of the actuator 41 and the friction material 51 of the second friction applying device 50 is pressed against the disc rotor 4a. That is, in the second mechanism portion 40, when the slip control operation is executed, the frictional force applied to the rear wheel 4 by the second friction applying device 50 is changed by the second control unit 62 controlling the output of the actuator 41.

### <Effect of Brake System>

The effect of the brake system according to the embodiment will be described.

In the brake system 10, the mechanism portion (second mechanism portion 40) includes the friction applying device (second friction applying device 50) which brakes the wheel (rear wheel 4) of the straddle-type vehicle 100 with a frictional force corresponding to the movement of the operator (second operator 12), the operator movement sensor (second operator movement sensor 92) which detects the movement of the operator (second operator 12), and the actuator 41 which is unitized with the friction applying device (second friction applying device 50). During normal braking, the control unit (second control unit 62) controls the output of the actuator 41 based on the detection result of the operator movement sensor (second operator movement sensor 92), whereby the frictional force applied to the wheel (rear wheel 4) is changed by the friction applying device (second friction applying device 50). Then, when the actuator 41 is in a non-energized state, a frictional force is applied to the wheel (rear wheel 4) by the friction applying device (second friction applying device 50). Therefore, when the energization of the actuator 41 is stopped for some reason, it becomes possible to apply a frictional force to the wheel (rear wheel 4), and thus it is possible to improve mountability of the brake system 10 to the straddle-type vehicle 100 while considering the safety.

Preferably, when the actuator 41 is energized, the frictional force applied to the wheel (rear wheel 4) by the friction applying device (second friction applying device 50) decreases as the output of the actuator 41 increases. With such a configuration, it is possible to easily achieve the improvement in the mountability of the brake system 10 to the straddle-type vehicle 100 while considering the safety.

Preferably, the control unit (second control unit 62) controls the output of the actuator 41 during the slip control operation for controlling the slip of the wheel (rear wheel 4), whereby the frictional force applied to the wheel (rear wheel 4) by the friction applying device (second friction applying device 50) is changed. With such a configuration, it is possible to improve the safety while maintaining the mountability of the brake system 10 to the straddle-type vehicle 100.

Preferably, the wheel braked by the friction applying device (second friction applying device 50) is the rear wheel 4 of the straddle-type vehicle 100. With such a configuration, when the energization is stopped for some reason, the rear wheel 4, which is relatively safe even when a large braking force is suddenly generated, is braked, and thus the safety is improved.

Embodiments of the invention are not limited to the above description. That is, the invention includes a modified form of the embodiment described above. In addition, the invention includes a form in which only a part of the embodiment described above is carried out, or a form in which some of the embodiments are combined.

For example, in the above, the case where the slip control operation can be executed in both the first mechanism portion 20 and the second mechanism portion 40 is described. However, the slip control operation may be infeasible in at least one of the first mechanism portion 20 and the second mechanism portion 40. That is, the hydraulic pressure adjusting unit 30 may be omitted in the first mechanism portion 20.

### Reference Signs List

1: Main body
2: Handle bar
3: Front wheel
4: Rear wheel
10: Brake system
11: First operator
12: Second operator
20: First mechanism portion
21: First friction applying device
22: Master cylinder
23: Reservoir
24: Fluid passage
25: Wheel cylinder
30: Hydraulic pressure adjusting unit
31: Substrate
32: Inlet valve
33: Outlet valve
34: Accumulator
35: Pump
36: Motor
37: Housing
38: Switching valve
39: Pressure amplifying valve
40: Second mechanism portion
41: Actuator
50: Second friction applying device
51: Friction material
52: Spindle
60: Control device
61: First control unit
62: Second control unit
81: Front wheel rotation speed sensor
82: Brake hydraulic pressure sensor
91: Rear wheel rotation speed sensor
92: Second operator movement sensor
93: Friction material movement sensor
100: Straddle-type vehicle

## Claims

1. A brake system (10) for a straddle-type vehicle (100) which includes at least one operator (12) operated by a rider, wherein
a mechanism portion (40) including a friction applying device (50) which brakes a wheel (4) of the straddle-type vehicle (100) with a frictional force corresponding to at least a movement of the operator (12) is provided,
the mechanism portion (40) further includes an operator movement sensor (92) for detecting the movement of the operator (12) and an actuator (41) unitized with the friction applying device (50),
**characterized in that**
a control unit (62) which controls an output of the actuator (41) based on a detection result of the operator movement sensor (92) to change the frictional force applied to the wheel (4) by the friction applying device (50) during normal braking is provided, and
when the actuator (41) is in a non-energized state, the frictional force is applied to the wheel (4) by the friction applying device (50).

2. The brake system (10) according to claim 1, wherein
when the actuator (41) is in an energized state, the frictional force applied to the wheel (4) by the friction applying device (50) decreases as the output of the actuator (41) increases.

3. The brake system (10) according to claim 1 or 2, wherein
the control unit (62) is unitized with another control unit (61) which changes a frictional force applied to another wheel (3) different from the wheel (4).

4. The brake system (10) according to claim 1 or 2, wherein
the control unit (62) is unitized with the friction applying device (50) and the actuator (41).

5. The brake system (10) according to claim 1 or 2, wherein
the control unit (62) is unitized with the operator movement sensor (92).

6. The brake system (10) according to any one of claims 1 to 5, wherein
the control unit (62) controls the output of the actuator (41) to change the frictional force applied to the wheel (4) by the friction applying device (50) during a slip control operation for controlling a slip of the wheel (4).

7. The brake system (10) according to claim 6, wherein
the slip control operation includes an operation in which anti-lock braking control is executed.

8. The brake system (10) according to claim 6 or 7, wherein
the slip control operation includes an operation in which spin suppression control is executed.

9. The brake system (10) according to any one of claims 6 to 8, wherein
the slip control operation includes an operation in which side-slip suppression control is executed.

10. The brake system (10) according to any one of claims 1 to 9, wherein
the wheel braked by the friction applying device (50) is a rear wheel (4) of the straddle-type vehicle (100).

11. A straddle-type vehicle (100) which includes the brake system (10) according to any one of claims 1 to 10.

## Patentansprüche

1. Bremssystem (10) für ein im Spreizsitz zu fahrendes Fahrzeug (100), das mindestens ein durch einen Fahrer betätigtes Bedienelement (12) aufweist, wobei
ein Mechanismusabschnitt (40) bereitgestellt ist, der eine Reibungskraft-Anlegevorrichtung (50) aufweist, die ein Rad (4) des im Spreizsitz zu fahrenden Fahrzeugs (100) mit einer Reibungskraft bremst, die mindestens einer Bewegung des Bedienelements (12) entspricht,
der Mechanismusabschnitt (40) des Weiteren einen Bedienelementbewegungssensor (92) zum Detektieren der Bewegung des Bedienelements (12) und einen mit der Reibungskraft-Anlegevorrichtung (50) vereinheitlichten Aktuator (41) aufweist,
**dadurch gekennzeichnet, dass**
eine Steuereinheit (62) bereitgestellt ist, die eine Abgabe des Aktuators (41) auf der Grundlage eines Detektionsergebnisses des Bedienelementbewegungssensors (92) steuert, um die durch die Reibungskraft-Anlegevorrichtung (50) während eines normalen Bremsens an das Rad (4) angelegte Reibungskraft zu ändern, und,
wenn sich der Aktuator (41) in einem nicht mit Energie beaufschlagten Zustand befindet, die Reibungskraft durch die Reibungskraft-Anlegevorrichtung (50) an das Rad (4) angelegt wird.

2. Bremssystem (10) nach Anspruch 1, wobei, wenn sich der Aktuator (41) in einem mit Energie beaufschlagten Zustand befindet, die durch die Reibungskraft-Anlegevorrichtung (50) an das Rad (4) angelegte Reibungskraft in dem Maße abnimmt, wie die Abgabe des Aktuators (41) zunimmt.

3. Bremssystem (10) nach Anspruch 1 oder 2, wobei
die Steuereinheit (62) mit einer weiteren Steuereinheit (61) vereinheitlicht ist, die eine an ein anderes Rad (3) als das Rad (4) angelegte Reibungskraft ändert.

4. Bremssystem (10) nach Anspruch 1 oder 2, wobei
die Steuereinheit (62) mit der Reibungskraft-Anlegevorrichtung (50) und dem Aktuator (41) vereinheitlicht ist.

5. Bremssystem (10) nach Anspruch 1 oder 2, wobei
die Steuereinheit (62) mit dem Bedienelementbewegungssensor (92) vereinheitlicht ist.

6. Bremssystem (10) nach einem der Ansprüche 1 bis 5, wobei die Steuereinheit (62) die Ausgabe des Aktuators (41) steuert, um die durch die Reibungskraft-Anlegevorrichtung (50) an das Rad (4) angelegte Reibungskraft während einer Schlupfsteuerungsoperation zum Steuern eines Schlupfes des Rads (4) zu ändern.

7. Bremssystem (10) nach Anspruch 6, wobei
die Schlupfsteuerungsoperation eine Operation aufweist, bei der eine Antiblockier-Bremssteuerung ausgeführt wird.

8. Bremssystem (10) nach Anspruch 6 oder 7, wobei
die Schlupfsteuerungsoperation eine Operation umfasst, bei der eine Fahrzeugdrehungsunterdrückungssteuerung ausgeführt wird.

9. Bremssystem (10) nach einem der Ansprüche 6 bis 8, wobei die Schlupfsteuerungsoperation eine Operation umfasst, bei der eine Seitenrutschunterdrückungssteuerung ausgeführt wird.

10. Bremssystem (10) nach einem der Ansprüche 1 bis 9, wobei das durch die Reibungskraft-Anlegevorrichtung (50) gebremste Rad ein Hinterrad (4) des im Spreizsitz zu fahrenden Fahrzeugs (100) ist.

11. Im Spreizsitz zu fahrendes Fahrzeug (100), aufweisend das Bremssystem (10) nach einem der Ansprüche 1 bis 10.

## Revendications

1. Système de freinage (10) pour un véhicule de type à enfourcher (100) qui comporte au moins un élément de manœuvre (12) actionné par un conducteur, dans lequel
une partie mécanisme (40) comportant un dispositif d'application de force de friction (50) qui freine une roue (4) du véhicule de type à enfourcher (100) avec une force de friction correspondant à au moins un mouvement de l'élément de manœuvre (12) est prévue,
la partie mécanisme (40) comporte en outre un capteur de mouvement d'élément de manœuvre (92) pour détecter le mouvement de l'élément de manœuvre (12) et un actionneur (41) unifiée avec le dispositif d'application de force de friction (50),
**caractérisé en ce que**
une unité de commande (62) qui commande une sortie de l'actionneur (41) sur la base d'un résultat de détection du capteur de mouvement d'élément de manœuvre (92) pour modifier la force de friction appliquée à la roue (4) par le dispositif d'application de force de friction (50) pendant un freinage normal est prévue, et
lorsque l'actionneur (41) est dans un état hors tension, la force de friction est appliquée à la roue (4) par le dispositif d'application de force de friction (50).

2. Système de freinage (10) selon la revendication 1, dans lequel
lorsque l'actionneur (41) est dans un état sous tension, la force de friction appliquée à la roue (4) par le dispositif d'application de force de friction (50) diminue à mesure que la sortie de l'actionneur (41) augmente.

3. Système de freinage (10) selon la revendication 1 ou 2, dans lequel
l'unité de commande (62) est unifiée avec une autre unité de commande (61) qui modifie une force de friction appliquée à une autre roue (3) différente de la roue (4).

4. Système de freinage (10) selon la revendication 1 ou 2, dans lequel
l'unité de commande (62) est unifiée avec le dispositif d'application de force de friction (50) et à l'actionneur (41).

5. Système de freinage (10) selon la revendication 1 ou 2, dans lequel
l'unité de commande (62) est unifiée avec le capteur de mouvement d'élément de manœuvre (92).

6. Système de freinage (10) selon l'une quelconque des revendications 1 à 5, dans lequel
l'unité de commande (62) commande la sortie de l'actionneur (41) pour modifier la force de friction appliquée à la roue (4) par le dispositif d'application de force de friction (50) au cours d'une opération de commande de patinage pour commander un patinage de la roue (4).

7. Système de freinage (10) selon la revendication 6, dans lequel
l'opération de commande de patinage inclut une opération au cours de laquelle une commande de freinage antiblocage est exécutée.

8. Système de freinage (10) selon la revendication 6 ou 7, dans lequel
l'opération de commande de patinage inclut une opération au cours de laquelle une commande de suppression de patinage est exécutée.

9. Système de freinage (10) selon l'une quelconque des revendications 6 à 8, dans lequel
l'opération de commande de patinage inclut une opération au cours de laquelle une commande de suppression de dérapage est exécutée.

10. Système de freinage (10) selon l'une quelconque des revendications 1 à 9, dans lequel
la roue freinée par le dispositif d'application de force de friction (50) est une roue arrière (4) du véhicule de type à enfourcher (100).

11. Véhicule de type à enfourcher (100) qui inclut le système de freinage (10) selon l'une quelconque des revendications 1 à 10.
